# EUROPEAN PATENT APPLICATION

(11) **EP 4 280 228 A1**
(43) Date of publication of application: **22.11.2023**
(21) Application number: 21918975.0
(22) Date of filing: 21.10.2021
(51) Int. Cl.: G21D 3/16, G21D 3/00, G21C 7/08

(54) **METHOD AND APPARATUS FOR CONTROLLING PRESSURIZED WATER REACTOR CORE, AND COMPUTER DEVICE AND STORAGE MEDIUM**

(30) Priority: 14.01.2021 CN 202110050286
(71) Applicant: China Nuclear Power Technology Research Institute Co., Ltd, Shenzhen, Guangdong 518031 (CN); China Nuclear Power Engineering Co., Ltd., Shenzhen, Guangdong 518124 (CN); China General Nuclear Power Corporation, Shenzhen, Guangdong 518028 (CN); CGN Power Co., Ltd., Shenzen, Guangdong 518028 (CN)
(72) Inventor: WANG, Xinxin, Shenzhen, Guangdong 518031 (CN); LU, Xianghui, Shenzhen, Guangdong 518031 (CN); CAI, Dechang, Shenzhen, Guangdong 518031 (CN); HE, Mingtao, Shenzhen, Guangdong 518031 (CN); DUAN, Rong, Shenzhen, Guangdong 518031 (CN); HAN, Song, Shenzhen, Guangdong 518031 (CN); FU, Xuefeng, Shenzhen, Guangdong 518031 (CN)
(74) Representative: Noble, Nicholas
(86) International application number: PCT/CN2021/125245
(87) International publication number: WO 2022/151784

(57) **Abstract**

The present disclosure relates to a method and apparatus for controlling a pressurized water reactor core, and a computer device and a storage medium. The method comprises: determining an operation mode of a pressurized water reactor core, wherein the pressurized water reactor core is loaded with at least one first control rod assembly, a second control rod assembly, a third control rod assembly and a plurality of fuel assemblies; acquiring a rod assembly control instruction corresponding to the operation mode; and according to the rod assembly control instruction, controlling the pressurized water reactor core on the basis of the first control rod assembly, the second control rod assembly and the third control rod assembly. By using the method, the aim of automatically controlling a pressurized water reactor core by means of a first control rod assembly, a second control rod assembly and a third control rod assembly is realized, and it is not necessary to control the pressurized water reactor core by frequently adjusting the concentration of boron in a primary circuit coolant, such that the control flow of the pressurized water reactor core is simplified, and thus the control efficiency of the pressurized water reactor core is improved.

## Description

### CROSS REFERENCE TO RELATED APPLICATION

The present application claims priority to Chinese Patent Application No. 202110050286.4, titled "Method and Apparatus for Controlling Pressurized Water Reactor Core, and Computer Device and Storage Medium", and filed on January 14, 2021, the content of which is expressly incorporated herein by reference in its entirety.

### TECHNICAL FIELD

The present application relates to the field of control technology, and particularly to a method and apparatus for controlling a pressurized water reactor core, a computer device, and a storage medium.

### BACKGROUND

The pressurized water reactor core is an important part of the pressurized water reactor, and the pressurized water reactor can be controlled by controlling the power of the pressurized water reactor core.

At present, the method for controlling the power of the pressurized water reactor core is generally implemented by changing the reactivity of the reactor core through regulating the boron concentration in the primary circuit coolant. However, such control method needs to inject water or a high-concentration boron solution into the primary circuit through the chemical capacity control system to dilute or borate the coolant. After each dilution or borating, the primary circuit coolant needs a certain time to mix evenly, so that the change speed of the boron concentration in the primary circuit coolant is slower, and the power for regulating the reactor is also slower. Furthermore, when the power of the reactor needs to rise and fall frequently, if the rise and fall is tracked individually by regulating the boron concentration, the primary circuit coolant needs to be frequently diluted and borated, the process is cumbersome and the operator may have a larger burden, resulting in a lower control efficiency of the pressurized water reactor core.

### SUMMARY

In view of this, for the above technical problems, it is necessary to provide a method and an apparatus for controlling a pressurized water reactor core, a computer device, and a storage medium capable of improving the control efficiency of the pressurized water reactor core.

A method for controlling a pressurized water reactor core includes:
determining an operation mode of the pressurized water reactor core, the pressurized water reactor core being loaded with at least one first control rod assembly, at least one second control rod assembly, at least one third control rod assembly, and a plurality of fuel assemblies;
acquiring a rod assembly control instruction corresponding to the operation mode;
controlling the pressurized water reactor core based on the first control rod assembly, the second control rod assembly, and the third control rod assembly according to the rod assembly control instruction.

In an embodiment, the determining the operation mode of the pressurized water reactor core includes:
acquiring operation information of the pressurized water reactor core,
acquiring an operation mode corresponding to the operation information as the operation mode of the pressurized water reactor core.

In an embodiment, the method further includes:
before acquiring the rod assembly control instruction corresponding to the operation mode,
acquiring a plurality of rod assembly control instructions corresponding to a plurality of operation modes;
sorting and storing each rod assembly control instruction corresponding to each operation mode in a preset database according to the plurality of operation modes;
the acquiring the rod assembly control instruction corresponding to the operation mode includes:
   querying the preset database to obtain the rod assembly control instruction corresponding to the operation mode.

In an embodiment, the querying the preset database to obtain the rod assembly control instruction corresponding to the operation mode includes:
when the operation mode of the pressurized water reactor core is a base load operation mode, acquiring a rod assembly control instruction corresponding to the base load operation mode from the preset database as a first control instruction;
when the operation mode of the pressurized water reactor core is a load tracking mode operation mode, acquiring a rod assembly control instruction corresponding to the load tracking mode operation mode from the preset database as a second control instruction.

In an embodiment, the controlling the pressurized water reactor core based on the first control rod assembly, the second control rod assembly, and the third control rod assembly according to the rod assembly control instruction includes:
according to the first control instruction, controlling the first control rod assembly to remain stationary and the third control rod assembly to stay on an upper portion of the pressurized water reactor core, controlling the second control rod assembly to be inserted into the pressurized water reactor core and gradually pulled out until the second control rod assembly reaches a pullout limit, and controlling the second control rod assembly to be inserted into a preset position in the pressurized water reactor core.

In an embodiment, the controlling the pressurized water reactor core based on the first control rod assembly, the second control rod assembly, and the third control rod assembly according to the rod assembly control instruction further includes:
at the beginning of the load tracking, controlling, according to the second control instruction, the first control rod assembly to be inserted into the pressurized water reactor core according to a preset calibration curve, to reduce a power of the pressurized water reactor core, and maintaining an axial offset of the pressurized water reactor core within a set operating band through the third control rod assembly;
when the power of the pressurized water reactor core reaches a preset power, controlling the second control rod assembly to be slowly pulled out of the pressurized water reactor core and then slowly reinsert into the pressurized water reactor core according to the second control instruction.

In an embodiment, the method further includes:
after controlling the pressurized water reactor core based on the first control rod assembly, the second control rod assembly, and the third control rod assembly according to the rod assembly control instruction,
generating a control operation log according to the control operation on the pressurized water reactor core;
transmitting the control operation log to a corresponding monitor terminal.

An apparatus for controlling a pressurized water reactor core includes:
a determination module, configured to determine an operation mode of the pressurized water reactor core, the pressurized water reactor core being loaded with at least one first control rod assembly, at least one second control rod assembly, at least one third control rod assembly, and a plurality of fuel assemblies;
an acquisition module, configured to acquire a rod assembly control instruction corresponding to the operation mode;
a control module, configured to control the pressurized water reactor core based on the first control rod assembly, the second control rod assembly, and the third control rod assembly according to the rod assembly control instruction.

A computer device, including a processor and a memory for storing a computer program, the processor, when executing the computer program, implements the steps of:
determining an operation mode of the pressurized water reactor core, the pressurized water reactor core being loaded with at least one first control rod assembly, at least one second control rod assembly, at least one third control rod assembly, and a plurality of fuel assemblies;
acquiring a rod assembly control instruction corresponding to the operation mode;
controlling the pressurized water reactor core based on the first control rod assembly, the second control rod assembly, and the third control rod assembly according to the rod assembly control instruction.

A computer-readable storage medium, on which a computer program is stored, the computer program, when executed by a processor, causes the processor to implement the steps of:
determining an operation mode of the pressurized water reactor core, the pressurized water reactor core being loaded with at least one first control rod assembly, at least one second control rod assembly, at least one third control rod assembly, and a plurality of fuel assemblies;
acquiring a rod assembly control instruction corresponding to the operation mode;
controlling the pressurized water reactor core based on the first control rod assembly, the second control rod assembly, and the third control rod assembly according to the rod assembly control instruction.

With the above-mentioned method and apparatus for controlling the pressurized water reactor core, the computer device and the storage medium, the operation mode of the pressurized water reactor core is determined, the pressurized water reactor core is loaded with at least one first control rod assembly, at least one second control rod assembly, at least one third control rod assembly, and a plurality of fuel assemblies; the rod assembly control instruction corresponding to the operation mode is acquired; finally the pressurized water reactor core is controlled based on the first control rod assembly, the second control rod assembly, and the third control rod assembly according to the rod assembly control instruction. Accordingly, the pressurized water reactor core is automatically controlled through the first control rod assembly, the second control rod assembly and the third control rod assembly, without frequently regulating the boron concentration in the primary circuit coolant, thereby simplifying the control process of the pressurized water reactor core, and improving the control efficiency of the pressurized water reactor core.

### BRIEF DESCRIPTION OF THE DRAWINGS

FIG. 1 is an application environment diagram of a method for controlling a pressurized water reactor core according to an embodiment.
FIG. 2 is a schematic flow chart showing a method for controlling a pressurized water reactor core according to an embodiment.
FIG. 3 is a schematic flow chart showing a method for controlling a pressurized water reactor core according to another embodiment.
FIG. 4 is a schematic structure diagram of an apparatus for controlling a pressurized water reactor core according to an embodiment.
FIG. 5 is an internal structure diagram of a computer device according to an embodiment.

### DETAILED DESCRIPTION

In order to make the purpose, technical solution and advantages of the present application clearer, the present invention will be further elaborated below with reference with the accompanying drawings and embodiments. It should be appreciated that the specific embodiments described here are merely used for explaining the present invention, not to limit the present invention.

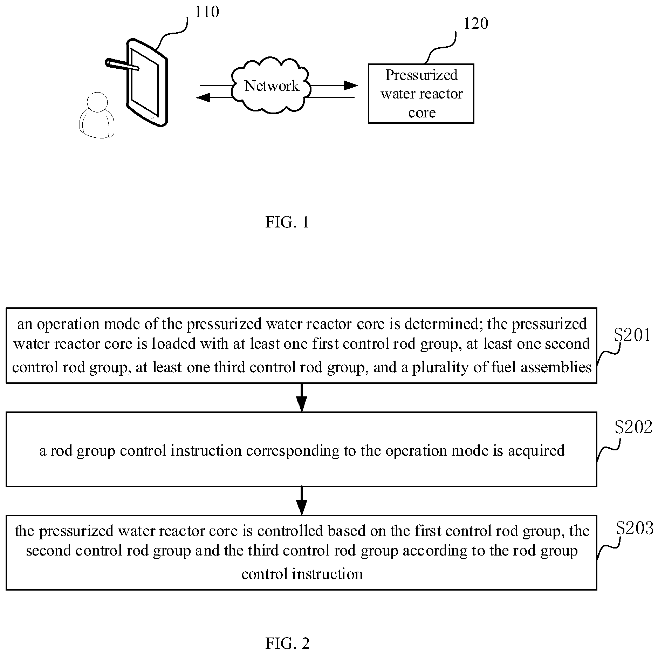

A method for controlling a pressurized water reactor core provided by the present invention can be applied to the application environment shown in FIG. 1, in which a control terminal 110 is in communication with the pressurized water reactor core 120 through a network. Referring to FIG. 1, the control terminal 110 determines an operation mode of the pressurized water reactor core 120. The pressurized water reactor core 120 is loaded with at least one first control rod assembly, at least one second control rod assembly, at least one third control rod assembly, and a plurality of fuel assemblies. A rod assembly control instruction corresponding to the operation mode is obtained; the pressurized water reactor core 120 is controlled based on the first control rod assembly, the second control rod assembly and the third control rod assembly according to the rod assembly control instruction. The control terminal 110 may be, but not limited to, various personal computers, notebook computers, smart phones, tablet computers and portable wearable devices.

In an embodiment, as shown in FIG. 2, a method for controlling a pressurized water reactor core is provided. The method is applied to the control terminal 110 in FIG. 1 as an example for illustration, and the method includes the following steps.

Step S201: an operation mode of the pressurized water reactor core is determined; the pressurized water reactor core is loaded with at least one first control rod assembly, at least one second control rod assembly, at least one third control rod assembly, and a plurality of fuel assemblies.

The pressurized water reactor refers to a pressurized water nuclear reactor, i.e., a reactor using pressurized, non-boiling light water (i.e., ordinary water) as a moderator and a coolant, and mainly consists of a fuel assembly, a moderator (also serving as a coolant), a control rod assembly, a burnable poison assembly, a neutron source assembly, a core barrel, and a pressure vessel.

The pressurized water reactor core 120 is loaded with a plurality of fuel assemblies, and at least one first control rod assembly, at least one second control rod assembly, and at least one third control rod assembly. The first control rod assembly refers to a P rod assembly, which is mainly configured to be moved into or out of a selected fuel assembly in the pressurized water reactor core 120 to regulate the power of the reactor core. The second control rod assembly refers to a T rod assembly, which is mainly configured to be moved into or out of a selected fuel assembly in the pressurized water reactor core 120 to compensate for a change in a temperature of the reactor core. The third control rod assembly refers to AO rod assembly, and is mainly configured to be moved into or out of a selected fuel assembly in the pressurized water reactor core 120 to regulate an axial power distribution of the reactor core.

It should be noted that, in some particular cases, the first control rod assembly may assist the second control rod assembly to regulate the temperature of the reactor core of the pressurized water reactor core 120, and the second control rod assembly may also assist the first control rod assembly to regulate the power of the reactor core of the pressurized water reactor core 120.

The pressurized water reactor core 120 may have a plurality of operation modes, such as a base load operation mode, a load tracking mode operation mode, and the like.

Specifically, the control terminal 110 obtains operation information of the pressurized water reactor core 120 in response to a control operation of a staff, and determines the operation mode of the pressurized water reactor core 120 according to the operation information of the pressurized water reactor core 120.

Step S202: a rod assembly control instruction corresponding to the operation mode is acquired.

The rod assembly control instruction refers to an instruction for controlling a corresponding control rod assembly (such as the first control rod assembly, the second control rod assembly, or the third control rod assembly, etc.) to move into and out of a selected fuel assembly in the pressurized water reactor core 120.

It should be noted that the rod assembly control instructions corresponding to different operation modes are different. For example, a rod assembly control instruction corresponding to the basic load operation mode is different from a rod assembly control instruction corresponding to the load tracking mode operation mode.

Specifically, according to the operation mode of the pressurized water reactor core 120, the control terminal 110 queries a preset corresponding relationship between the operation mode and the rod assembly control instruction, and obtains the rod assembly control instruction corresponding to the operation mode of the pressurized water reactor core 120. In such a manner, it is beneficial to subsequently control the pressurized water reactor core 120 based on the first control rod assembly, the second control rod assembly and the third control rod assembly according to the rod assembly control instruction corresponding to the operation mode of the pressurized water reactor core 120.

Step S203: the pressurized water reactor core 120 is controlled based on the first control rod assembly, the second control rod assembly and the third control rod assembly according to the rod assembly control instruction.

Specifically, the control terminal 110 controls the first control rod assembly, the second control rod assembly, and the third control rod assembly to move into or out of a selected fuel assembly in the pressurized water reactor core 120 according to the rod assembly control instruction, to control the power of the reactor core of the pressurized water reactor core 120, compensate for the change in the temperature of the reactor core, and regulate the axial power distribution of the reactor core, etc., thereby completing the control of the pressurized water reactor core 120.

In the above-mentioned method for controlling the pressurized water reactor core, the operation mode of the pressurized water reactor core is determined, the pressurized water reactor core is loaded with at least one first control rod assembly, at least one second control rod assembly, at least one third control rod assembly, and a plurality of fuel assemblies; the rod assembly control instruction corresponding to the operation mode is acquired; the pressurized water reactor core is controlled based on the first control rod assembly, the second control rod assembly and the third control rod assembly according to the rod assembly control instruction. Accordingly, the pressurized water reactor core is automatically controlled through the first control rod assembly, the second control rod assembly and the third control rod assembly, without frequently regulating the boron concentration in the primary circuit coolant, thereby simplifying the control process of the pressurized water reactor core, and improving the control efficiency of the pressurized water reactor core.

In an embodiment, the step of determine the operation mode of the pressurized water reactor core in the step S201 may specifically include: operation information of the pressurized water reactor core is acquired, an operation mode corresponding to the operation information is acquired as the operation mode of the pressurized water reactor core.

Specifically, the control terminal 110 acquires the operation information of the pressurized water reactor core 120 connected to the control terminal 110, and queries the preset corresponding relationship between the operation information and the operation mode according to the operation information of the pressurized water reactor core 120; the operation mode corresponding to the operation information is obtained as the operation mode of the pressurized water reactor core 120.

In the embodiment, the operation information of the pressurized water reactor core 120 is acquired, and then the operation mode of the pressurized water reactor core 120 is determined according to the operation information of the pressurized water reactor core 120, such manner is beneficial to automatically control the pressurized water reactor core 120 based on the first control rod assembly, the second control rod assembly and the third control rod assembly according to the rod assembly control instruction corresponding to the operation mode of the pressurized water reactor core 120.

In an embodiment, before the step of acquiring the rod assembly control instruction corresponding to the operation mode in the above-mentioned step S202, the method may further include: a plurality of rod assembly control instructions corresponding to a plurality of operation modes are acquired; each rod assembly control instruction corresponding to each operation mode is sorted and stored in a preset database according to the plurality of operation modes.

Specifically, based on a big data technology, the control terminal 110 pregenerates a plurality of rod assembly control instructions corresponding to the plurality of operation modes, such as the rod assembly control instruction corresponding to the basic load operation mode, the rod assembly control instruction corresponding to the load tracking mode operation mode, etc.; and then the control terminal 110 sorts and stores each rod assembly control instruction corresponding to each operation mode in the preset database according to the operation modes, so that the plurality of rod assembly control instructions corresponding to the plurality of operation modes can be stored in the preset database, in order to query the database directly to obtain the rod assembly control instruction corresponding to the operation mode of the pressurized water reactor core 120.

Further, the step of acquiring the rod assembly control instruction corresponding to the operation mode in the above-mentioned step S202 may specifically include: the preset database is queried to obtain the rod assembly control instruction corresponding to the operation mode.

Specifically, the control terminal 110 queries the preset database storing a plurality of rod assembly control instructions corresponding to a plurality of operation modes according to the operation mode of the pressurized water reactor core 120, and obtains the rod assembly control instruction corresponding to the operation mode of the pressurized water reactor core 120.

In the embodiment, the rod assembly control instruction corresponding to the operation mode of the pressurized water reactor core is obtained by querying the preset database storing a plurality of rod assembly control instructions corresponding to a plurality of operation modes, which is beneficial to automatically control the pressurized water reactor core based on the first control rod assembly, the second control rod assembly, and the third control rod assembly according to the rod assembly control instruction corresponding to the operation mode of the pressurized water reactor core, thereby simplifying the control process of the pressurized water reactor core and improving the control efficiency of the pressurized water reactor core.

In an embodiment, the step of querying the preset database to obtain the rod assembly control instruction corresponding to the operation mode may specifically include: when the operation mode of the pressurized water reactor core is the base load operation mode, a rod assembly control instruction corresponding to the base load operation mode is acquired from the preset database as a first control instruction; when the operation mode of the pressurized water reactor core is the load tracking mode operation mode, a rod assembly control instruction corresponding to the load tracking mode operation mode is acquired from the preset database as a second control instruction.

In the embodiment, the rod assembly control instruction corresponding to the operation mode is obtained by querying the preset database, which is beneficial to automatically control the pressurized water reactor core based on the first control rod assembly, the second control rod assembly and the third control rod assembly according to the rod assembly control instruction corresponding to the operation mode of the pressurized water reactor core, thereby simplifying the control process of the pressurized water reactor core and improving the control efficiency of the pressurized water reactor core.

In an embodiment, the step of controlling the pressurized water reactor core based on the first control rod assembly, the second control rod assembly and the third control rod assembly according to the rod assembly control instruction in the above-mentioned step S203 may specifically include: according to the first control instruction, the first control rod assembly is controlled to remain stationary and the third control rod assembly is controlled to stay on an upper portion of the pressurized water reactor core, the second control rod assembly is controlled to be inserted into the pressurized water reactor core and to be gradually pulled out until the second control rod assembly reaches a pullout limit, and the second control rod assembly is controlled to be inserted into a preset position in the pressurized water reactor core.

For example, when the operation mode of the pressurized water reactor core 120 is the base load operation mode, the control terminal 110, according to the first control instruction, controls a T rod assembly configured to regulate the temperature and compensate for a change in the reactivity of the reactor core to be inserted into the pressurized water reactor core 120, and controls the T rod assembly to be gradually pulled out to compensate for a burnup effect; when the pullout limit is reached to, an operator regulates the boron concentration and rearranges the T rod assembly to an appropriate position to implement the stage regulation of the soluble boron. Meanwhile, according to the first control instruction, the control terminal 110 controls the P rod assembly configured to regulate the power of the reactor core to remain stationary, and controls the AO rod assembly configured to regulate the axial power distribution of the reactor core to stay on the upper portion of the pressurized water reactor core 120, thereby implementing the control of the pressurized water reactor core 120.

In the embodiment, the pressurized water reactor core is automatically controlled based on the first control rod assembly, the second control rod assembly and the third control rod assembly according to the rod assembly control instruction corresponding to the operation mode of the pressurized water reactor core, to implement the precise control of the load tracking and axial power distribution with regulating the boron concentration, thereby reducing the burden on the operator and improving the control efficiency of the pressurized water reactor core, and meanwhile improving the advanced and intelligent level of the nuclear power operation.

In an embodiment, the step of controlling the pressurized water reactor core based on the first control rod assembly, the second control rod assembly and the third control rod assembly according to the rod assembly control instruction in the above step S203 may specifically include: at the beginning of the load tracking, the first control rod assembly is controlled according to the second control instruction to be inserted into the pressurized water reactor core according to a preset calibration curve, to reduce the power of the pressurized water reactor core, and an axial offset of the pressurized water reactor core is maintained within a set operating band through the third control rod assembly; when the power of the pressurized water reactor core reaches a preset power, the second control rod assembly is controlled to be slowly pulled out of the pressurized water reactor core and then slowly reinsert into the pressurized water reactor core according to the second control instruction.

For example, when the operation mode of the pressurized water reactor core 120 is the load tracking mode operation mode, the control terminal 110 compensates an effect caused by the power change by the P rod assembly and compensates an effect caused by a xenon poison change by the T rod assembly according to the second control instruction. When the T rod assembly reaches the insertion limit or the pullout limit, the T rod assembly is placed in an appropriate position by regulating the boron concentration, and at the same time, the AO rod assembly is controlled to regulate the axial power distribution of the reactor core, thereby implementing the control of the pressurized water reactor core 120.

In the embodiment, the pressurized water reactor core is automatically controlled based on the first control rod assembly, the second control rod assembly and the third control rod assembly according to the rod assembly control instruction corresponding to the operation mode of the pressurized water reactor core, to implement the precise control of the load tracking and the axial power distribution without regulating the boron concentration, thereby reducing the burden on the operator, and improving the control efficiency of the pressurized water reactor core, and meanwhile improving the advanced and intelligent level of the nuclear power operation.

In an embodiment, after the step of controlling the pressurized water reactor core based on the first control rod assembly, the second control rod assembly and the third control rod assembly according to the rod assembly control instruction in the above step S202, the method may further include: a control operation log is generated according to the control operation on the pressurized water reactor core, and the control operation log is transmitted to a corresponding monitor terminal.

For example, the control terminal 110 generates a control operation log in real time according to the control operation on the pressurized water reactor core 120, and transmits the control operation log to the corresponding monitor terminal, such as a mobile phone, a tablet computer of the operator, etc., so that the operator can check the control operation records on the pressurized water reactor core 120 in time, and when the pressurized water reactor core 120 fails, the pressurized water reactor core 120 can be repaired in time, or, in the event of a safety accident, a responsibility may be retroactively assigned to a corresponding operator.

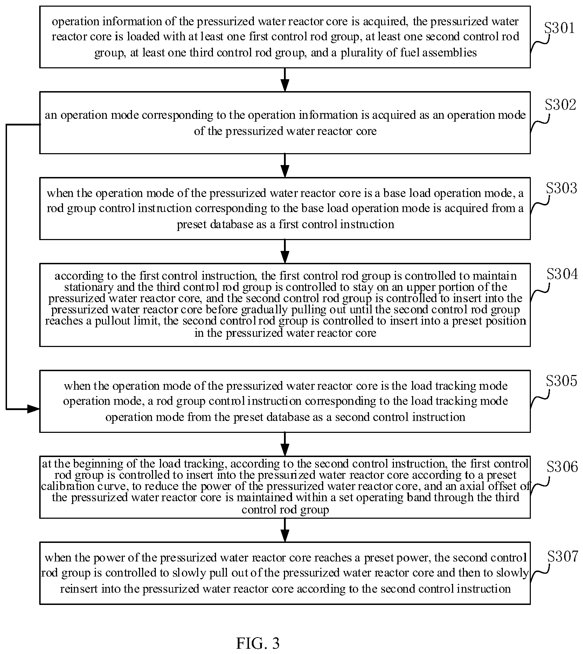

In an embodiment, as shown in FIG. 3, another method for controlling the pressurized water reactor core is provided, which is applied to the control terminal 110 in FIG. 1 as an example for illustration, the method may include the following steps.

Step S301: operation information of the pressurized water reactor core is acquired, the pressurized water reactor core is loaded with at least one first control rod assembly, at least one second control rod assembly, at least one third control rod assembly, and a plurality of fuel assemblies.

Step S302: an operation mode corresponding to the operation information is acquired as an operation mode of the pressurized water reactor core.

Step S303: when the operation mode of the pressurized water reactor core is a base load operation mode, a rod assembly control instruction corresponding to the base load operation mode is acquired from a preset database as a first control instruction.

Step S304: according to the first control instruction, the first control rod assembly is controlled to maintain stationary and the third control rod assembly is controlled to stay on an upper portion of the pressurized water reactor core, and the second control rod assembly is controlled to be inserted into the pressurized water reactor core before being gradually pulled out until the second control rod assembly reaches a pullout limit, the second control rod assembly is controlled to be inserted into a preset position in the pressurized water reactor core.

Step S305: when the operation mode of the pressurized water reactor core is the load tracking mode operation mode, a rod assembly control instruction corresponding to the load tracking mode operation mode from the preset database as a second control instruction.

Step S306: at the beginning of the load tracking, according to the second control instruction, the first control rod assembly is controlled to be inserted into the pressurized water reactor core according to a preset calibration curve, to reduce the power of the pressurized water reactor core, and an axial offset of the pressurized water reactor core is maintained within a set operating band through the third control rod assembly.

Step S307: when the power of the pressurized water reactor core reaches a preset power, the second control rod assembly is controlled to be slowly pulled out of the pressurized water reactor core and then to slowly reinsert into the pressurized water reactor core according to the second control instruction.

The above method for controlling the pressurized water reactor core implements the purpose of automatically controlling the pressurized water reactor core based on the first control rod assembly, the second control rod assembly and the third control rod assembly, without frequently regulating the boron concentration in the primary circuit coolant to control the pressurized water reactor core, thereby simplifying the control process of the pressurized water reactor core and improving the control efficiency of the pressurized water reactor core.

In order to clearer illustrate the method for controlling the pressurized water reactor core provided by the embodiment of the present invention, the method for controlling the pressurized water reactor core will be described below with a specific example. In an embodiment, a method for controlling a multi-rod joint control core of the pressurized water reactor nuclear power plant is provided, which may specifically include the following contents.

In the embodiment, a reactor core consisting of 177 fuel assemblies is taken as an example. A total of 69 sets of control rod assemblies are used in the reactor core. The number of the fuel assemblies and the control rod assemblies can be adjusted according to actual conditions. Referring to Table 1, in addition to a shutdown rod assembly, other control rods in the reactor core are divided into three groups according to the functions: power regulation, temperature regulation and axial power distribution control. The Prod assembly is required to meet a specified number of overlapping steps and sequence when moving, and is configured to control a reactor core flatness ratio. The T rod assembly is required to meet a specified number of overlapping steps and sequence when moving, and is configured to control the reactivity of the reactor core/average temperature of the coolant. The AO rod assembly is configured to control the axial power distribution of the reactor core. The shutdown rod assembly is an S rod assembly, which is configured to ensure that the reactor has a sufficient shutdown margin at any power level.

**Table 1**

| Functional grouping | Group name | Number of control rod assemblies |
|---|---|---|
| Function regulation rod assembly | P1 | 4 |
| | P2 | 4 |
| | PX | 8 |
| | PY | 8 |
| Temperature regulation rod assembly | T1 | 4 |
| | T2 | 4 |
| | T3 | 4 |
| | T4 | 4 |
| Axial power distribution regulation rod assembly | AO | 9 |
| Shutdown | SA | 8 |
| | SB | 8 |
| | SC | 4 |
| Total number | | 69 |

1. When operating at the base load, the reactor core is controlled by the following manner.
   During the operation at the base load, the P rod assembly is at a fully pulled out position. As the fuel continues to burn up, the reactivity of the reaction core decreases, and the average temperature of the reactor coolant decreases. The T rod assembly is gradually pulled out to maintain the average temperature of the coolant within the set operating range. When the T rod assembly reaches the pullout limit, the operator regulates the boron concentration to bring the control rod assembly back into the operating range. During the operation, the axial offset of the reactor core is maintained within the set operating band through the AO rod assembly.
2. When the reactor core operates in the load tracking mode, the reactor core is controlled by the following manner.

When the load tracking starts, a load of a steam turbine decreases, and the P rod assembly is inserted according to the preset calibration curve to reduce the reactor power. The power reduction may turn on a xenon transient, and when a low power operation platform is reached, an accumulation of the xenon may introduce a negative reactivity, the average temperature of the reactor coolant may decrease, and the T rod assembly may be slowly pulled out to maintain the average temperature of the coolant within the set operating band; after the xenon peak, the T rod assembly is slowly reinserted into the pressurized water reactor core; otherwise, when the load of the steam turbine increases, the P rog group is pulled out according to the preset calibration curve to improve the reactor power. When a high power operation platform is reached, the consumption of the xenon introduces a positive reactivity, the average temperature of the reactor coolant increases, and the T rod assembly is slowly inserted downward to maintain the average temperature of the coolant within the set operating band; after passing through a xenon valley, the T rod assembly is slowly pulled out again.

It should be noted that during the entire transient process, the AO rod assembly is configured to maintain the axial offset of the reactor core within the set operating band; the soluble boron is regulated in stages to restore the control rod assembly into the operating range. In the automatic operation mode, the P rod assembly is driven by a preset power-rod position calibration curve signal, the T rod assembly is driven by a temperature error signal, and the AO rod assembly is driven by a reactor core axial offset error signal.

In the embodiment, the control rods are used for controlling the reactivity of the reactor core instead of regulating the soluble boron, and the reactivity and the power distribution during the base load operation and load tracking process are automatically completed by the rod control system, which greatly reduces the burden on the operator. The whole process can substantially implement the regulation of boron concentration in stages, thereby reducing the number of the boron regulations, simplifying the design of the chemical capacity system, reducing the cost of wastewater treatment, and benefitting the environmental protection. In addition, compared to the load tracking with the boron regulation, since the waste liquid treatment system does not need to participate during the load tracking, the load tracking ability of the nuclear power plant is effectively extended.

It should be appreciated that although the various steps in the flow charts in FIGS. 2-3 are displayed sequentially as indicated by the arrows, these steps are not definitely executed sequentially in the order indicated by the arrows. Unless otherwise specified herein, there is no strict order restriction on the execution of these steps, and these steps can be executed in other orders. Moreover, at least some of the steps in FIGS. 2-3 may include multiple steps or multiple stages. These steps or stages are not definitely executed at the same moment, but may be executed at different moments. The execution order of these steps or stages is not necessarily performed sequentially, but may be performed in turns or alternately with other steps or at least a part of steps or stages in other steps.

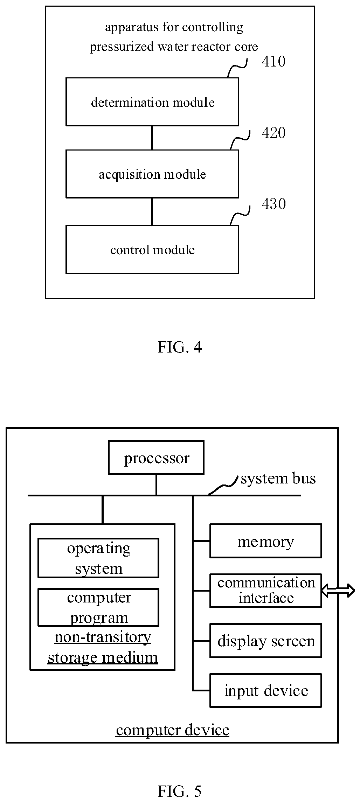

In an embodiment, as shown in FIG. 4, an apparatus for controlling a pressurized water reactor core is provided, which includes: a determination module 410, an acquisition module 420, and a control module 430.

The determination module 410 is configured to determine an operation mode of the pressurized water reactor core; the pressurized water reactor core is loaded with at least one first control rod assembly, at least one second control rod assembly, at least one third control rod assembly, and a plurality of fuel assemblies.

The acquisition module 420 is configured to acquire a rod assembly control instruction corresponding to the operation mode.

The control module 430 is configured to control the pressurized water reactor core based on the first control rod assembly, the second control rod assembly, and the third control rod assembly according to the rod assembly control instruction.

In an embodiment, the determination module 410 is further configured to acquire operation information of the pressurized water reactor core, and acquire an operation mode corresponding to the operation information as an operation mode of the pressurized water reactor core.

In an embodiment, the apparatus for controlling the pressurized water reactor core provided by the present invention further includes a storage module configured to acquire a plurality of rod assembly control instructions corresponding to a plurality of operation modes, and respectively sort and store each rod assembly control instruction corresponding to each operation mode into a preset database according to the operation modes.

The acquisition module 420 is further configured to query the preset database to obtain the rod assembly control instruction corresponding to the operation mode.

In an embodiment, the acquisition module 420 is further configured to acquire a rod assembly control instruction corresponding to the base load operation mode from the preset database as a first control instruction when the operation mode of the pressurized water reactor core is the base load operation mode, and acquire a rod assembly control instruction corresponding to a load tracking mode operation mode from the preset database as a second control instruction when the operation mode of the pressurized water reactor core is the load tracking mode operation mode.

In an embodiment, the control module 430 is further configured to, according to the first control instruction, control the first control rod assembly to remain stationary and the third control rod assembly to stay on an upper portion of the pressurized water reactor core, and control the second control rod assembly to be inserted into the pressurized water reactor core before gradually pulling out until the second control rod assembly reaches a pullout limit, and control the second control rod assembly to be inserted into a preset position in the pressurized water reactor core.

In an embodiment, the control module 430 is further configured to, at the beginning of the load tracking, control the first control rod assembly according to the second control instruction to be inserted into the pressurized water reactor core according to a preset calibration curve, to reduce the power of the pressurized water reactor core, and maintain an axial offset of the pressurized water reactor core within a set operating band through the third control rod assembly; when the power of the pressurized water reactor core reaches a preset power, control the second control rod assembly to be slowly pulled out of the pressurized water reactor core and then to slowly reinsert into the pressurized water reactor core according to the second control instruction.

In an embodiment, the apparatus for controlling the pressurized water reactor core provided by the present invention may further include a transmission module configured to generate a control operation log according to the control operation on the pressurized water reactor core, and transmit the control operation log to a corresponding monitor terminal.

For the specific limitations of the apparatus for controlling the pressurized water reactor core, reference can be made to the above-mentioned definition of the method for controlling the pressurized water reactor core, which will not be repeated here. Each module in the above-mentioned apparatus for controlling the pressurized water reactor core can be fully or partially realized by software, hardware and a combination thereof. The above-mentioned modules can be embedded in or independent of a processor in a computer device in the form of hardware, or can also be stored in a memory of the computer device in the form of software, so that the processor can invoke and execute the corresponding operations corresponding to the above-mentioned modules.

In an embodiment, a computer device is provided. The computer device may be a terminal, and an internal structure thereof may be as shown in FIG. 5. The computer device may include a processor, a memory, a communication interface, a display screen and an input device connected through a system bus. The processor of the computer device is configured to provide calculation and control capabilities. The memory of the computer device includes a non-transitory storage medium and an internal memory. The non-transitory storage medium stores an operating system and a computer program. The internal memory provides an environment for the operations of the operating system and computer program in the non-transitory storage medium. The communication interface of the computer device is configured to communicate with an external terminal in a wired or wireless manner, and the wireless manner can be realized through WIFI, an operator network, Near Field Communication (NFC) or other technologies. When the computer program is executed by the processor, a method for controlling the pressurized water reactor core is implemented. The display screen of the computer device may be a liquid crystal display screen or an electronic ink display screen; and the input device of the computer device may be a touch layer covered on the display screen, or a button, a trackball or a touch pad provided on the casing of the computer device, or an external keyboard, touch pad or mouse.

Those skilled in the art can understand that the structure shown in FIG. 5 is only a block diagram of a partial structure related to the disclosed solution, and does not constitute a limitation to the computer device to which the disclosed solution is applied. The specific computer device may include more or less components than those shown in the figure, or combine certain components, or have different component arrangements.

In an embodiment, a computer device us further provided, which includes a processor and a memory for storing a computer program, and the processor implements the steps in the above method embodiments when executing the computer program.

In an embodiment, a computer-readable storage medium is provided, on which a computer program is stored, and the steps in the foregoing method embodiments is implemented when the computer program is executed by a processor.

Those of ordinary skill in the art may understand that all or part of the processes of the method in the above embodiments can be implemented by instructing related hardware by a computer program. The computer program can be stored in a non-transitory computer-readable storage medium. When the computer program is executed, the processes in the embodiments of the above-mentioned method can be implemented. Any reference to the memory, storage, database or other media used in the various embodiments provided by the present invention may include at least one of non-transitory memory and transitory memory. The non-transitory memory may include a Read-Only Memory (ROM), a magnetic tape, a floppy disk, a flash memory or an optical memory, and the like. The transitory memory may include a Random Access Memory (RAM) or an external cache memory. By way of illustration and not limitation, the RAM can be in various forms, such as a Static Random Access Memory (SRAM) or a Dynamic Random Access Memory (DRAM), etc.

The technical features of the above embodiments can be combined arbitrarily. To make the description concise, all possible combinations of the technical features in the above embodiments are not described. However, as long as there is no contradiction in the combination of these technical features, they should be considered as within the scope of the present application.

The above-mentioned embodiments merely express several implementation modes of the present application, and the descriptions thereof are relatively specific and detailed, but should not be construed as limiting the scope of the present invention. It should be noted that those skilled in the art can make several modifications and improvements without departing from the concept of the present application, and these all fall within the protection scope of the present application. Therefore, the scope of protection of the present invention should be subject to the appended claims.

## Claims

1. A method for controlling a pressurized water reactor core, **characterized by** comprising:
determining an operation mode of the pressurized water reactor core, the pressurized water reactor core being loaded with at least one first control rod assembly, at least one second control rod assembly, at least one third control rod assembly, and a plurality of fuel assemblies;
acquiring a rod assembly control instruction corresponding to the operation mode; and
controlling the pressurized water reactor core based on the first control rod assembly, the second control rod assembly, and the third control rod assembly according to the rod assembly control instruction.

2. The method according to claim 1, wherein the determining the operation mode of the pressurized water reactor core comprises:
acquiring operation information of the pressurized water reactor core; and
acquiring an operation mode corresponding to the operation information as the operation mode of the pressurized water reactor core.

3. The method according to claim 1, further comprising:
before acquiring the rod assembly control instruction corresponding to the operation mode,
acquiring a plurality of rod assembly control instructions corresponding to a plurality of operation modes;
sorting and storing each rod assembly control instruction corresponding to each operation mode in a preset database according to the plurality of operation modes;
wherein the acquiring the rod assembly control instruction corresponding to the operation mode comprises:
querying the preset database to obtain the rod assembly control instruction corresponding to the operation mode.

4. The method according to claim 3, wherein the querying the preset database to obtain the rod assembly control instruction corresponding to the operation mode comprises:
when the operation mode of the pressurized water reactor core is a base load operation mode, acquiring a rod assembly control instruction corresponding to the base load operation mode from the preset database as a first control instruction; or
when the operation mode of the pressurized water reactor core is a load tracking mode operation mode, acquiring a rod assembly control instruction corresponding to the load tracking mode operation mode from the preset database as a second control instruction.

5. The method according to claim 4, wherein the controlling the pressurized water reactor core based on the first control rod assembly, the second control rod assembly, and the third control rod assembly according to the rod assembly control instruction comprises:
according to the first control instruction, controlling the first control rod assembly to remain stationary and the third control rod assembly to stay on an upper portion of the pressurized water reactor core, controlling the second control rod assembly to be inserted into the pressurized water reactor core and be gradually pulled out until the second control rod assembly reaches a pullout limit, and controlling the second control rod assembly to be inserted into a preset position in the pressurized water reactor core.

6. The method according to claim 4, wherein the controlling the pressurized water reactor core based on the first control rod assembly, the second control rod assembly, and the third control rod assembly according to the rod assembly control instruction further comprises:
at the beginning of the load tracking, controlling, according to the second control instruction, the first control rod assembly to be inserted into the pressurized water reactor core according to a preset calibration curve, to reduce a power of the pressurized water reactor core, and maintaining an axial offset of the pressurized water reactor core within a set operating band through the third control rod assembly; and
when the power of the pressurized water reactor core reaches a preset power, controlling the second control rod assembly to be slowly pulled out of the pressurized water reactor core and then slowly reinsert into the pressurized water reactor core according to the second control instruction.

7. The method according to any one of claims 1 to 6, further comprising:
after controlling the pressurized water reactor core based on the first control rod assembly, the second control rod assembly, and the third control rod assembly according to the rod assembly control instruction,
generating a control operation log according to the control operation on the pressurized water reactor core;
transmitting the control operation log to a corresponding monitor terminal.

8. An apparatus for controlling a pressurized water reactor core, **characterized by** comprising:
a determination module, configured to determine an operation mode of the pressurized water reactor core, the pressurized water reactor core being loaded with at least one first control rod assembly, at least one second control rod assembly, at least one third control rod assembly, and a plurality of fuel assemblies;
an acquisition module, configured to acquire a rod assembly control instruction corresponding to the operation mode;
a control module, configured to control the pressurized water reactor core based on the first control rod assembly, the second control rod assembly, and the third control rod assembly according to the rod assembly control instruction.

9. A computer device, comprising a processor and a memory storing a computer program, wherein the processor implements the steps of the method according to any one of claims 1 to 7 when executing the computer program.

10. A computer-readable storage medium, on which a computer program is stored, wherein when the computer program is executed by a processor, the steps of the method according to any one of claims 1 to 7 are implemented.
